# EUROPÄISCHE PATENTSCHRIFT

(11) **EP 0 462 395 B1**
(45) Veröffentlichungstag und Bekanntmachung des Hinweises auf die Patenterteilung: **12.10.1994**
(21) Anmeldenummer: 91107759.2
(22) Anmeldetag: 14.05.1991
(51) Int. Cl.: B30B 15/02

(54) **Pressenanlage für das Herstellen von Pressteilen**
Installation for the production of pressed articles
Installation pour la fabrication d'objets pressés

(30) Priorität: 19.06.1990 DE 9006854 U
(43) Veröffentlichungstag der Anmeldung: 27.12.1991
(73) Patentinhaber: Maschinenfabrik J. Dieffenbacher GmbH & Co., D-75020 Eppingen (DE)
(72) Erfinder: Schmidts, Klaus, W-4600 Dortmund 70 (DE)
(74) Vertreter: Hartdegen, Anton

(56) Entgegenhaltungen:
- FR-A- 1 273 021
- FR-A- 2 383 777
- US-A- 3 150 787
- US-A- 3 841 141

## Beschreibung

Die Erfindung bezieht sich auf eine Pressenanlage für das Herstellen von Preßteilen mit mindestens zwei nebeneinander angeordneten Pressenlinien und zwei Werkzeugwechselwagen, wobei jede Pressenlinie eine zwischen einer Beschick- und einer Entleervorrichtung angeordnete Presse enthält und wobei die Werkzeugwechselwagen quer zu den Pressenlinien auf einem horizontal verlegten Gleis verfahrbar sind.

Pressenanlagen der vorgenannten Art gehören zum Stand der Technik, siehe z.B. FR-A-2 383 777.

In derartigen Pressenanlagen erfolgt der Werkzeugwechsel durch Bewegen der Werkzeuge längs und quer zu den Pressenlinien auf einer Horizontalebene, die auf dem Niveau der Pressentische und der Werkzeugaufnahmen der verfahrbaren Werkzeugwechselwagen liegt.

Bei solchen Pressenanlagen ist der pressenabstand verhältnismäßig groß, damit der Werkzeugwechsel an jeder Presse ohne Beeinträchtigung einer benachbarten Presse durchgeführt werden kann.

Der Erfindung liegt die Aufgabe zugrunde, eine Pressenanlage der eingangs genannten Art so auszubilden, daß bei geringem Pressenabstand der Werkzeugwechsel an jeder Presse ohne Beeinträchtigung einer benachbarten Presse ermöglicht wird.

Erfindungsgemäß wird diese Aufgabe dadurch gelöst, daß vor jeder Presse an der Werkzeugwechselseite ein Schacht zum Führen und Zentrieren einer heb- und absenkbaren Plattform eines jeden Werkzeugwechselwagens angeordnet ist.

Jeder Werkzeugwechselwagen weist einen Scherenhubantrieb auf.

Nach einem weiteren Merkmal der Erfindung sind jedem Schacht vier Führungsrollen und vier Tragelemente zugeordnet.

Jede Plattform ist mit vier Zentrierbolzen ausgeführt.

Im folgenden wird die Erfindung anhand einer Zeichnung, in der ein Ausführungsbeispiel schematisch dargestellt ist, näher beschrieben.

Es zeigt
- Fig. 1: eine Pressenanlage mit einer Werkzeugwechseleinrichtung in Ansicht und einen Schnitt durch eine Schachtabdeckung,
- Fig. 2: einen Teilschnitt entsprechend der Linie II-II in Fig. 1 in vergrößertem Maßstab,
- Fig. 3: eine Teilansicht in Richtung des Pfeiles A in Fig. 2 in der Phase vor dem Herausziehen eines Werkzeuges aus einer Presse,
- Fig. 4: eine Teilansicht in Richtung des Pfeiles A in Fig. 2 in der Phase nach dem Herausziehen des Werkzeuges aus der Presse.

Eine Pressenanlage 1 hat zwei nebeneinander angeordnete Pressenlinien 2, 3, von denen jede aus einer Transportvorrichtung 4, 5 für Preßgut 6, einem Ofen 7, 8 zum Erhitzen des Preßguts 6, einer Beschickvorrichtung 9, 10, einer hydraulischen Presse 11, 12, einer Entleervorrichtung 13, 14, einer Kühlvorrichtung 15, 16 zum Abkühlen der Preßteile 17, einer Transportvorrichtung 18, 19 zum Transportieren der abgekühlten Preßteile 17 und einer Werkzeugwechseleinrichtung 20 besteht.

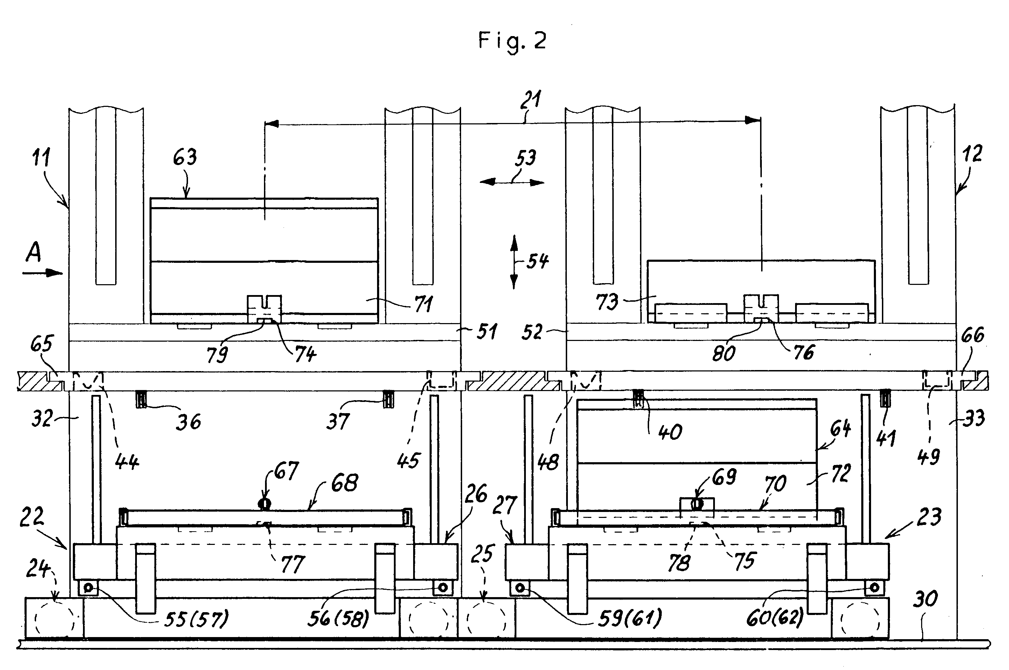

Der Pressenabstand ist mit 21 bezeichnet (Fig. 2). Beim Preßgut 6 handelt es sich um thermoplastischen Kunststoff.

Die Werkzeugwechseleinrichtung 20 besitzt zwei gleich ausgebildete Werkzeugwechselwagen 22, 23 mit je einem Fahrantrieb 24, 25 und je einer heb- und absenkbaren Plattform 26, 27.

Jeder Werkzeugwechselwagen 22, 23 weist einen Scherenhubantrieb 28, 29 zum Heben und Absenken der Plattform 26, 27 auf.

Beide Werkzeugwechselanlagen 22, 23 sind quer zu den Pressenlinien 2, 3 auf einem horizontal verlegten Gleis 30 verfahrbar.

Vor jeder hydraulischen Presse 11, 12 ist an der Werkzeugwechselseite 31 ein Schacht 32, 33 mit je vier Führungsrollen 34, 35, 36, 37, 38, 39, 40, 41 und je vier Tragelementen 42, 43, 44, 45, 46, 47, 48, 49 angeordnet.

Die Führungsrollen 34 bis 41 bewirken ein Führen der Plattformen 26, 27 im oberen Hubbereich in einem Abstand 50 zu den Pressentischen 51, 52.

Die Tragelemente 42 bis 49 dienen der Zentrierung der hochgehobenen Plattformen 26, 27 in Gleisrichtung (Doppelpfeil 53) und in senkrechter Richtung (Doppelpfeil 54).

Jede Plattform 26, 27 ist mit vier horizontal verschiebbaren Zentrierbolzen 55, 56, 57, 58, 59, 60, 61, 62 ausgeführt.

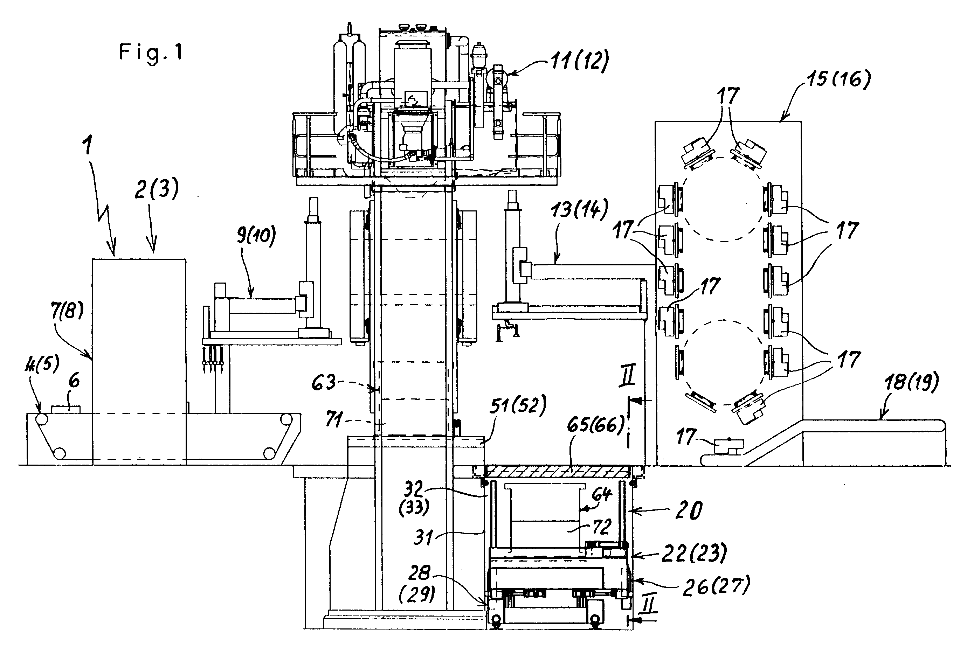

In den Fig. 1 und 2 ist die hydraulische Presse 11 mit einem auf dem Pressentisch 51 aufliegenden Werkzeug 63 dargestellt, das gegen ein auf dem Werkzeugwechselwagen 23 befindliches Werkzeug 64 ausgewechselt werden soll.

Zu jedem Schacht 32, 33 gehört eine Schachtabdeckung 65, 66. Die Schachtabdeckung 65 wird während des Werkzeugwechsels mit jeder Plattform 26, 27 hochgehoben und abgesenkt.

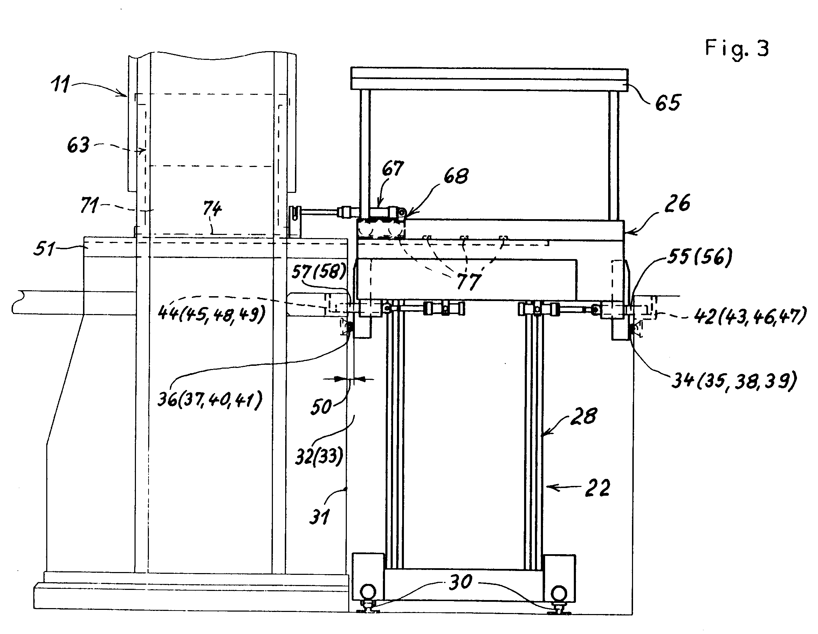

Zu Beginn des Werkzeugwechselvorganges werden nacheinander die Plattform 26 des Werkzeugwechselwagens 22 etwas über das Niveau des Pressentisches 51 hochgehoben, die vier Zentrierbolzen 55, 56, 57, 58 nach außen verschoben, die Plattform 26 durch Absenken auf die Tragelemente 42, 43, 44, 45 zentriert und das Werkzeug 63 an einen auf der Plattform 26 verschiebbar angeordneten Verschiebezylinder 67 gekuppelt (Fig. 3).

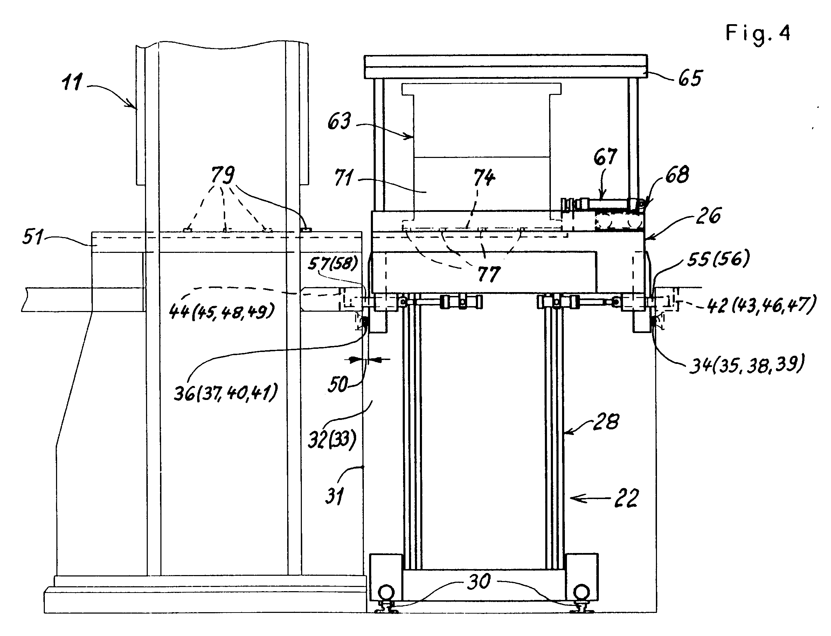

Danach wird das Werkzeug 63 mit Hilfe des Verschiebezylinders 67 und eines Verschiebeantriebes 68 von dem Pressentisch 51 auf die Plattform 26 gezogen (Fig. 4).

Anschließend werden nacheinander die Plattform 26 mit dem Werkzeug 63 etwas hochgehoben, die Zentrierbolzen 55, 56, 57, 58 zurückgezogen, die Plattform 26 mit dem Werkzeug 63 abgesenkt und der Werkzeugwechselwagen 22 mit dem Werkzeug 63 aus dem Schacht 32 gefahren.

Sodann wird das Werkzeug 64 mit dem Werkzeugwechselwagen 23 in den Schacht 32 gefahren, damit es mit der Plattform 27 in die Verschiebeposition gebracht werden kann. Eine solche Verschiebeposition des Werkzeuges 64 ist vergleichbar mit der Position des herausgezogenen Werkzeuges 63 aus der hydraulischen Presse 11 (Fig. 4).

Sobald das Werkzeug 64 in diese Verschiebeposition gelangt ist, wird es mit einem Verschiebezylinder 69 und einem Verschiebeantrieb 70 von der Plattform 27 auf den Pressentisch 51 geschoben.

Hiernach nehmen die Plattform 27 und das auf den Pressentisch 51 geschobene Werkzeug 64 eine Position ein, die vergleichbar ist mit der Position der Plattform 26 und des Werkzeuges 63 in Fig. 3.

Die unteren Werkzeughälften 71, 72, 73 sind mittig mit je einer Führungsnut 74, 75, 76 versehen.

An den Plattformen 26, 27 und Pressentischen 51, 52 sind Führungselemente 77, 78, 79, 80 zum Eingriff in die Führungsnuten 74, 75, 76 angeordnet.

## Patentansprüche

1. Pressenanlage für das Herstellen von Preßteilen (17), mit mindestens zwei nebeneinander angeordneten Pressenlinien (2, 3) und zwei Werkzeugwechselwagen, (22, 23) wobei jede Pressenlinie (2, 3) eine zwischen einer Beschick- (9, 10) und einer Entleervorrichtung (13, 14) angeordnete Presse (11, 12) enthält und wobei die Werkzeugwechselwagen (22, 23) quer zu den Pressenlinien (2, 3) auf einem horizontal verlegten Gleis (30) verfahrbar sind, dadurch gekennzeichnet, daß vor jeder Presse (11, 12) an der Werkzeugwechselseite (31) ein Schacht (32, 33) zum Führen und Zentrierung einer heb- und absenkbaren Plattform (26, 27) eines jeden Werkzeugwechselwagens (22, 23) angeordnet ist.

2. Pressenanlage nach Anspruch 1, dadurch gekennzeichnet, daß jeder Werkzeugwechselwagen (22, 23) einen Scherenhubantrieb (28, 29) aufweist.

3. Pressenanlage nach Anspruch 1, dadurch gekennzeichnet, daß jedem Schacht (32, 33) vier Führungsrollen (34, 35, 36, 37, 38, 39, 40, 41) und vier Tragelemente (42, 43, 44, 45, 46, 47, 48, 49) zugeordnet sind.

4. Pressenanlage nach den Ansprüchen 1 und 3, dadurch gekennzeichnet, daß jede Plattform (26, 27) mit vier Zentrierbolzen (55, 56, 58, 59, 60, 61, 62) ausgeführt ist.

## Claims

1. A press arrangement for producing compression mouldings (17), having at least two adjacent compressing lines (2, 3) and two tool-changing carriages (22, 23), wherein each compressing line (2, 3) contains a press (11, 12) which is arranged between a loading mechanism (9, 10) and an unloading mechanism (13, 14) and wherein the tool-changing carriages (22, 23) are able to travel transversely to the compressing lines (2, 3) on a horizontally placed rail (30), characterised in that arranged in front of each press (11, 12) on the tool-changing side (31) is a shaft (32, 33) to guide and centre a platform (26, 27), which can be raided and lowered, of each tool-changing carriage (22, 23).

2. A press arrangement according to Claim 1, characterised in that each tool-changing carriage (22, 23) has a scissors elevating drive (28, 29).

3. A press arrangement according to Claim 1, characterised in that associated with each shaft (32, 33) are four guide rollers (34, 35, 36, 37, 38, 39, 40, 41) and four support elements (42, 43, 44, 45, 46, 47, 48, 49).

4. A press arrangement according to Claims 1 and 3, characterised in that each platform (26, 27) is provided with four centering bolts (55, 56, 58, 59, 60, 61, 62).

## Revendications

1. Installation de presses pour la fabrication de pièces embouties (17), comportant au moins deux lignes de presse (2, 3) disposées côté à côte et deux chariots de changement d'outil (22, 23), chaque ligne de presse (2, 3) comprenant une presse (11, 12) qui est placée entre un dispositif de chargement (9, 10) et un dispositif de déchargement (13, 14) et les chariots de changement d'outil (22, 23) pouvant être déplacés transversalement aux lignes de presse (2, 3) sur une voie (30) horizontale, caractérisé par le fait qu'une trémie (32, 33) est agencée devant chaque presse (11, 12), côté changement d'outil (31) à des Fins de guidage et de centrage d'une plateforme (26, 27) relevable et abaissable de chacun des chariots (22, 23) de changement d'outil.

2. Installation de presses selon la revendication 1, caractérisée par le fait que chaque chariot (22, 23) de changement d'outil comporte un mécanisme de levage à leviers croisés (28, 29).

3. Installation de presses selon la revendication 1, caractérisée par le fait qu'à chaque trémie (32, 33) sont associés quatre galets de guidage (34, 35, 36, 37, 38, 39, 40, 41) et quatre éléments porteurs (42, 43, 44, 45, 46, 47, 48, 49).

4. Installation de presses selon les revendication 1 et 3, caractérisée par le fait que chaque plateforme (26, 27) comporte quatre doigts de centrage (55, 56, 58, 59, 60, 61, 62).
